# EUROPEAN PATENT SPECIFICATION

(11) **EP 4 066 996 B1**
(45) Date of publication and mention of the grant of the patent: **04.11.2026**
(21) Application number: 20898124.1
(22) Date of filing: 28.09.2020
(51) Int. Cl.: B24B 41/04, B24B 19/26, B24B 37/025, B24B 37/34, B24B 41/02, B24B 51/00, B24B 55/02, G05B 19/402, G05B 19/4065

(54) **MACHINE TOOL**
WERKZEUGMASCHINE
MACHINE-OUTIL

(30) Priority: 09.12.2019 CN 201911252188
(43) Date of publication of application: 05.10.2022
(73) Proprietor: DMG Mori Co., Ltd., Yamatokoriyama-shi, Nara 639-1160 (JP)
(72) Inventor: KAGO, Shinji, Yamatokoriyama-shi, Nara 639-1160 (JP); TANAKA, Toyotada, Yamatokoriyama-shi, Nara 639-1160 (JP)
(74) Representative: Isarpatent
(86) International application number: PCT/JP2020/036536
(87) International publication number: WO 2021/117318

(56) References cited:
- WO-A1-2016/162979
- JP-A- 2002 178 252
- JP-A- 2003 127 060
- JP-A- 2003 127 060
- JP-A- 2005 262 385
- JP-A- 2005 342 851
- JP-A- 2005 342 851
- JP-A- 2006 289 566
- JP-A- 2012 030 311
- JP-A- 2012 240 176
- JP-A- 2012 240 176
- JP-A- 2012 240 177
- JP-A- 2017 124 460
- JP-A- 2017 154 240
- JP-A- H0 647 654
- US-A- 4 662 122

## Description

### Technical Field

0001 The present invention relates to a machine tool for grinding an outer surface of a spherical object.

### Background Art

0002 Some workpieces have a convex spherical surface on a distal end of a shaft body thereof, such as a ball shaft for a ball joint. A known example of a machine tool for grinding the convex spherical surface of such a workpiece is the honing machine disclosed in Japanese Unexamined Patent Application publication No. 2015-229214.

0003 As disclosed, this honing machine machines a curved or spherical surface of a workpiece and includes a workpiece rotation mechanism for rotating the workpiece and a grindstone rotation mechanism for rotating a grindstone. In this honing machine, the grindstone rotation mechanism includes a turret rotation disk having grindstones attached on the outer periphery thereof, a single grindstone driving means rotating a shaft of each grindstone, and an uncoupling means uncoupling grindstone rotating shafts and a shaft of the grindstone driving means. The honing machine is configured to switch the grindstone rotating shafts through the uncoupling means for driving.

0004 The honing machine incudes a horizontal swing mechanism for swinging the turret rotation disk in the rotating direction and the direction opposite to the rotating direction with respect to the workpiece supported by the workpiece rotation mechanism. Further, the workpiece rotation mechanism includes a vertical swing mechanism for swinging the workpiece vertically and a horizontal swing mechanism for swinging the workpiece horizontally.

0005 In grinding the curved surface of the workpiece, the curved surface of the workpiece is grinded by swinging the turret rotation disk vertically through a vertical swing mechanism of the grindstone rotation mechanism and/or swinging the turret rotation disk horizontally through the horizontal swing mechanism with respect to the workpiece supported horizontally by the workpiece rotation mechanism.

### Citation List

### Patent Literature

0006
Patent Literature 1: Japanese Unexamined Patent Application Publication No. 2015-229214
Patent Literature 2: Japanese Patent Publication No. 2006 289566 A
Patent Literature 3: Japanese Patent Publication No. 2012 240176 A

### Summary of Invention

### Technical Problem

0007 The above-described honing machine is a dedicated machine tool that has a complicated structure specially developed for grinding a curved surface of a workpiece; therefore, the honing machine is very expensive. Accordingly, if the product to be machined is small in production quantity, the equipment cost to order volume will be excessive, which leads to significantly high manufacturing cost. Further, the mechanical operation of the honing machine is also complicated because of its complicated structure; therefore, the honing machine cannot always provide efficient machining.

0008 The present invention has been achieved in view of the above-described circumstances, and an object of the invention is to provide a machine tool which is capable of efficiently grinding a convex spherical surface of a workpiece by a relatively simple configuration.

### Solution to Problem

0009 The present invention is set out by the appended claims.

To solve the above-described problems, the present invention provides a machine tool, as defined by independent claim 1, including:
a workpiece spindle unit including a workpiece spindle and a workpiece spindle motor, the workpiece spindle being rotatably held and configured to hold a workpiece, the workpiece spindle motor being configured to rotate the workpiece spindle;
a tool spindle unit including a tool spindle and a tool spindle motor, the tool spindle being rotatably held and configured to hold a cup grindstone, the tool spindle motor being configured to rotate the tool spindle;
a first-axis movement mechanism configured to move the tool spindle unit relative to the workpiece spindle unit in a direction of a first axis that extends along an axis of the workpiece spindle; and
a second-axis movement mechanism configured to move the tool spindle unit relative to the workpiece spindle unit in a direction of a second axis perpendicular to the first axis, wherein the tool spindle unit is arranged on a table with an axis of the tool spindle positioned in a plane that is parallel to a plane formed by the first axis and the second axis and that includes the axis of the workpiece spindle; and
a controller configured to control the workpiece spindle motor, the tool spindle motor, the first-axis movement mechanism, and the second-axis movement mechanism, wherein:
   the first-axis movement mechanism includes a first-axis drive motor;
   the second-axis movement mechanism includes a second-axis drive motor;
   the tool spindle unit is arranged with the axis of the tool spindle tilted with respect to the second axis;
   the cup grindstone has a formed concave surface coming into contact with a spherical portion of the workpiece to grind the spherical portion of the workpiece; and
   the controller is configured to drive both the first-axis movement mechanism and the second-axis movement mechanism to move the tool spindle unit relative to the workpiece spindle unit along the axis of the tool spindle through combined operation of the first-axis movement mechanism and second-axis movement mechanism, thereby bringing the concave surface of the cup grindstone held by the tool spindle into contact with the spherical portion of the workpiece held by the workpiece spindle to grind the spherical portion of the workpiece.

0010 This machine tool consists of the bare minimum of components required to grind a convex spherical surface of a workpiece, i.e., the workpiece spindle unit, the tool spindle unit, the first-axis movement mechanism, the second-axis movement mechanism, and the controller controlling them. Therefore, this machine tool can be produced at a low cost; consequently, even when the product to be machined is small in production quantity, the equipment cost to order volume can be suppressed and the product can therefore be manufactured at an appropriate cost.

0011 In this machine tool, as described above, the controller drives the first-axis movement mechanism and the second-axis movement mechanism to move the tool spindle unit relative to the workpiece spindle unit along the axis of the tool spindle through combined operation of the first-axis movement mechanism and second-axis movement mechanism, whereby the workpiece held by the workpiece spindle is grinded by the cup grindstone held by the tool spindle. Thus, this machine tool grinds a workpiece by a very simple mechanical operation; therefore, this machine tool is capable of providing more efficient machining than the above-described conventional honing machine.

0012 The machine tool according to the present invention may have a configuration in which:
the controller is configured to drive at least one of the first-axis movement mechanism and second-axis movement mechanism to move the tool spindle unit relative to the workpiece spindle unit at a rapid feed rate such that the cup grindstone is positioned at an approach position set at a position prior to the cup grindstone coming into contact with the workpiece, and then drive both the first-axis movement mechanism and the second-axis movement mechanism to move the tool spindle unit relative to the workpiece spindle unit at a grinding feed rate set for grinding; and
the controller is further configured to monitor a load on at least one of the workpiece spindle motor, tool spindle motor, first-axis drive motor, and second-axis drive motor to detect the cup grindstone coming into contact with the workpiece and configured to revise the approach position to a position which is located prior to and spaced a preset distance from a detected contact position between the cup grindstone and the workpiece.

0013 In this machine tool, for example, when starting grinding with a new cup grindstone attached to the tool spindle, the position of the grinding acting surface of the cup grindstone is not accurately recognized; therefore, the approach position for the first-time grinding is set at a safe position which is sufficiently spaced away. In the first-time grinding, the position of contact between the cup grindstone and the workpiece is recognized through monitoring of a load on at least one of the workpiece spindle motor, tool spindle motor, first-axis drive motor, and second-axis drive motor, and, based on the recognized position, the approach position is revised to a position shifted as much as possible to the workpiece side. Thereafter, in and after the second-time machining, the cup grindstone is first moved at a rapid feed rate to the approach position shifted as much as possible to the workpiece side, and then grinding is performed at a grinding feed rate; therefore, the grinding is performed efficiently in a shorter machining time.

0014 Furthermore, the machine tool according to the present invention may have a configuration in which:
the machine tool further includes a detector configured to detect an outer diameter of the workpiece reaching a predetermined dimension during grinding of the workpiece;
the controller is configured to finish the grinding when the detector detects the outer diameter of the workpiece reaching the predetermined dimension and configured to store as a machining completion position a relative positional relation between the cup grindstone and the workpiece at the time of detection; and
the controller is further configured to, in machining a plurality of workpieces with the cup grindstone, compare a machining completion position obtained in machining of a current workpiece with a machining completion position obtained in machining of an initial workpiece, and when an amount of variation between the machining completion positions exceeds a predetermined limit amount, judge that the cup grindstone has reached an end of its life and make a notification to outside.

0015 In the machine tool having this configuration, a relative positional relation between the cup grindstone and the workpiece obtained at the time when completion of machining is detected by the detector is stored as a machining completion position. Further, in machining a plurality of workpieces, the machining completion position detected in each machining is compared with the initially detected machining completion position and an amount of variation between them is calculated. This amount of variation is equivalent to an amount of wear of the cup grindstone. Therefore, when the amount of variation, i.e., the amount of wear, exceeds a predetermined limit amount, the cup grindstone is judged to have reached the end of its life and a notification is made to the outside. Since the notification that the cup grindstone has reached the end of its life is made to the outside, it is possible to replace the cup grindstone having reached the end of its life with a new one at an appropriate time. By replacing the cup grindstone appropriately in this manner, the grinding acting part of the cup grindstone, which performs machining on the workpieces, is kept in a suitable condition, so that the accuracy in machining the workpieces is suitably maintained.

0016 Furthermore, the machine tool according to the present invention may have a configuration in which:
the cup grindstone has a through hole formed to penetrate the cup grindstone along an axis of the cup grindstone;
the tool spindle has a supply hole communicating with the through hole of the cup grindstone held by the tool spindle; and
the machine tool further includes a coolant supply mechanism configured to supply coolant to the supply hole of the tool spindle to discharge the coolant through an opening of the through hole formed in the cup grindstone.

0017 In typical grinding, coolant is supplied to the grinding acting part to cool the workpiece and prevent clogging of the grindstone. However, in grinding using a cup grindstone, these effects cannot be expected because coolant sprayed from the outside hardly reaches the inside of the grinding acting part. With the machine tool having the above-described configuration, since the coolant supply mechanism is provided such that coolant is discharged through the opening of the through hole formed in the cup grindstone, coolant spreads all over the grinding acting part; therefore, the above-mentioned cooling effect and clogging prevention effect are sufficiently obtained.

### Advantageous Effects of Invention

0018 The machine tool according to the present invention consists of the bare minimum of components required to grind a convex spherical surface of a workpiece, i.e., the workpiece spindle unit, the tool spindle unit, the first-axis movement mechanism, the second-axis movement mechanism, and the controller controlling them. Therefore, this machine tool can be produced at a low cost; consequently, even when the product to be machined is small in production quantity, the equipment cost to order volume can be suppressed and the product can therefore be manufactured at an appropriate cost.

0019 Further, this machine tool grinds a workpiece by the very simple mechanical operation, that is, by driving the first-axis movement mechanism and the second-axis movement mechanism through the controller so as to relatively move the workpiece spindle unit and the tool spindle unit along the axis of the tool spindle through combined operation of the first-axis movement mechanism and second-axis movement mechanism. Therefore, this machine tool is capable of providing more efficient machining than the above-described conventional honing machine.

### Brief Description of Drawings

0020
FIG. 1 is a plan view of a machine tool according to an embodiment of the present invention;
FIG. 2 is a partially cutaway front view of a spindle unit in the embodiment;
FIG. 3 is a block diagram illustrating a control-relevant configuration in the embodiment;
FIG. 4 is a flowchart illustrating a process in a controller in the embodiment;
   and
FIG. 5 is a flowchart illustrating the process in the controller in the embodiment.

### Description of Embodiments

0021 Hereinafter, a specific embodiment of the present invention will be described with reference to the drawings.

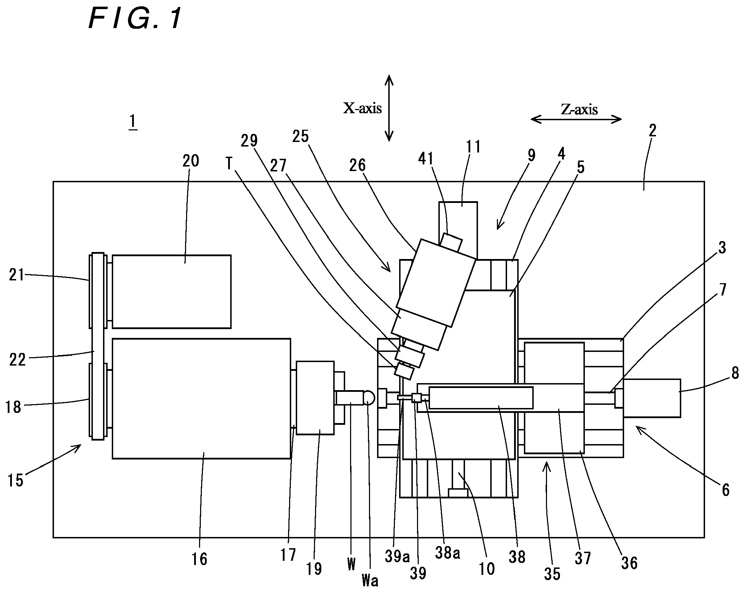

0022 As illustrated in FIGS. 1 to 3, a machine tool 1 according to this embodiment includes a bed 2, a guide board 3 and a workpiece spindle unit 15 arranged on the bed 2, a carriage 4 and a detection unit 35 arranged on the guide board 3, a table 5 arranged on the carriage 4, a tool spindle unit 25 arranged on the table 5, a Z-axis movement mechanism 6, an X-axis movement mechanism 9, a coolant supply mechanism 40, and a controller 50.

0023 Note that the object to be grinded by the machine tool 1 is an axial workpiece W having a spherical portion Wa on a distal end thereof. Note further that the bed 2, guide board 3, workpiece spindle unit 15, carriage 4, table 5, Z-axis movement mechanism 6, and X-axis movement mechanism 9 of the machine tool 1 are configured similarly to those of a typical general-purpose NC machine tool. These components are described below.

0024 As illustrated in FIG. 1, the workpiece spindle unit 15 is arranged on the left part of the bed 2. The workpiece spindle unit 15 includes a workpiece headstock 16, a workpiece spindle 17 rotatably supported by the spindle headstock 16, a chuck 19 attached to the right end of the workpiece spindle 17, and a workpiece spindle motor 20 arranged side by side with the workpiece headstock 16. The workpiece spindle 17 has a pulley 18 attached to the left end thereof, and the workpiece spindle motor 20 also has a pulley 21 attached to an output shaft on the left end thereof. Around the pulleys 18 and 21, a transmission belt 22 is looped. Thus, a rotational driving force of the workpiece spindle motor 20 is transmitted to the workpiece spindle 17 through the pulley 21, the transmission belt 22, and the pulley 18, so that the workpiece spindle 17 as well as the chuck 19 rotate about the axis thereof. Further, as illustrated in FIG. 1, the workpiece W is clamped by the chuck 19 with the spherical portion Wa positioned on the right side.

0025 The guide board 3 is arranged on the right side of the workpiece spindle unit 15 such that the longitudinal direction of the guide board 3 extends along the axis of the workpiece spindle 17. The guide board 3 guides the carriage 4 in a direction of Z-axis that extends along the axis of the workpiece spindle 17. The table 5 is arranged on the carriage 4 and is moved in a direction of X-axis, which extends perpendicularly to the Z-axis, by a guide unit provided on the carriage 4.

0026 The Z-axis movement mechanism 6 consists of a ball screw 7 extending along the Z-axis and rotatably arranged on the guide board 3, a ball nut (not illustrated) screwed on the ball screw 7 and fixed on a lower surface of the carriage 4, and a Z-axis drive motor 8 connected to an end of the ball screw 7 to cause the ball screw 7 to rotate about the axis thereof. When the ball screw 7 is rotated about the axis thereof by the Z-axis drive motor 8, the carriage 4 moves in the Z-axis direction in accordance with the screwing between the ball screw 7 and the ball nut (not illustrated) screwed on the ball screw 7.

0027 The X-axis movement mechanism 9 consists of a ball screw 10 extending along the X-axis and rotatably arranged on the carriage 4, a ball nut (not illustrated) screwed on the ball screw 10 and fixed on a lower surface of the table 5, and an X-axis drive motor 11 connected to an end of the ball screw 10 to cause the ball screw 10 to rotate about the axis thereof. When the ball screw 10 is rotated about the axis thereof by the X-axis drive motor 11, the table 5 moves in the X-axis direction in accordance with the screwing between the ball screw 10 and the ball nut (not illustrated) screwed on the ball screw 10.

0028 The tool spindle unit 25 includes a tool headstock 26, a tool spindle 27 rotatably supported by the tool headstock 26, and a collet chuck 29 attached to the front end of the tool spindle 27. In FIG. 1, the tool spindle unit 25 is disposed above the axis of the workpiece spindle 17 at the right side of the workpiece spindle unit 15. The tool spindle unit 25 is arranged on the table 5 with the axis of the tool spindle 27 positioned in a plane which is parallel to an X-Z plane and includes the axis of the workpiece spindle 17 and with the collet chuck 29 positioned on the workpiece spindle unit 15 side and tilted to the right with respect to the X-axis.

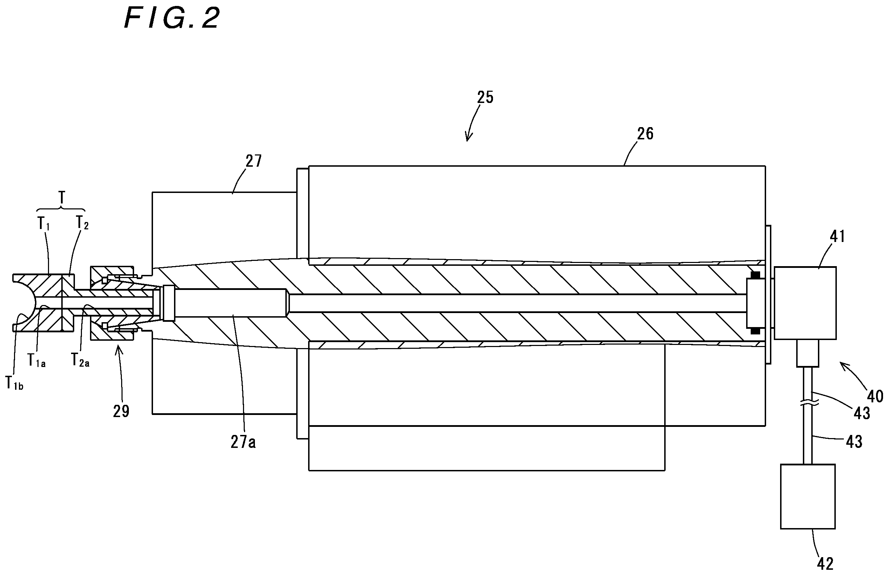

0029 As illustrated in FIG. 2, the tool spindle 27 has a through hole 27a that is formed along the axis of the tool spindle 27 in the center of the tool spindle 27. The rear end (the end located on the right side in FIG. 2) of the tool spindle 27 is connected to a ball joint 46, while the front end (the end located on the left side in FIG. 2) of the tool spindle 27 has the collect chuck 29 attached thereto. The collet chuck 29 holds a cup grindstone (hereinafter, simply referred to as "grindstone") T.

0030 The grindstone T consists of a grindstone part T₁ and a shaft part T₂ holding the grindstone part T₁. The grindstone part T₁ has a formed concave surface T_{1b} on a front end surface thereof, the concave surface T_{1b} coming into contact with the spherical portion Wa of the workpiece W to grind the spherical portion Wa. The grindstone part T₁ and the shaft part T₂ respectively have through holes T₁ₐ and T₂ₐ formed in the center thereof. When the grindstone T is held by the collect chuck 29, the through holes T₁ₐ and T₂ₐ of the grindstone T communicate with the through hole 27a of the tool spindle 27.

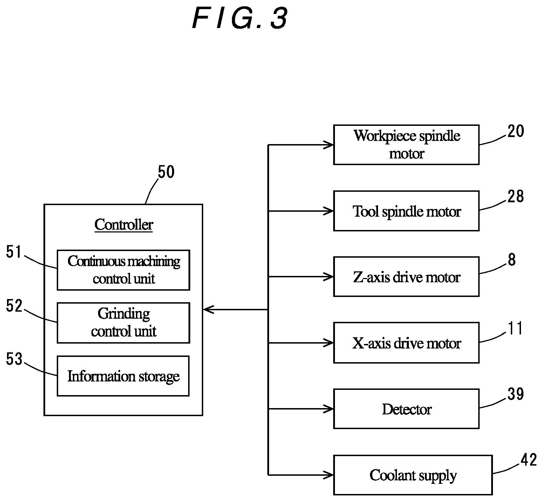

0031 Although omitted in FIG. 2, the tool headstock 26 has a tool spindle motor 28, which is illustrated in FIG. 3, incorporated therein. The tool spindle 27 rotates about the axis thereof by being driven by the tool spindle motor 28.

0032 The coolant supply mechanism 40 consists of the rotary joint 41 connected to the rear end of the tool spindle 27, and a coolant supply 42 connected to the rotary joint 41 via an appropriate supply pipe 43.

0033 The detection unit 35 consists of a base 36 disposed on the right side of the carriage 4 in FIG. 1 and fixed on the guide board 3, a support 37 fixed on the base 36 and arranged to have its longitudinal direction along the Z-axis and overhang the table 5, an air cylinder 38 fixed on the support 37 such that the axis of the air cylinder 38 is coaxial with the axis of the workpiece spindle 17 and the distal end of a piston rod 38a faces the workpiece spindle 17, and a detector 39 held on the distal end of the piston rod.

0034 The detector 39 has a pair of arm-like styluses 39a configured to come into contact with the spherical portion Wa of the workpiece W in a manner to sandwich the spherical portion Wa from above and below. The styluses 39a detect the diameter of the spherical portion Wa by coming into contact with the spherical portion Wa. The detector 39 is used in a manner such that the styluses 39a come into contact with the spherical portion Wa of the workpiece W while the spherical portion Wa is being grinded. When the spherical portion Wa reaches a set diameter, the detector 39 outputs a detection signal, that is to say, a grinding completion signal. The thus-configured detector 39 is typically used in grinding and called "sizing device".

0035 As illustrated in FIG. 3, the controller 50 is connected to the workpiece spindle motor 20, the tool spindle motor 28, the Z-axis drive motor 8, the X-axis drive motor 11, the detector 39, and the coolant supply 42 to control operations of the workpiece spindle motor 20, tool spindle motor 28, Z-axis drive motor 8, X-axis drive motor 11, and coolant supply 42. The controller 50 is composed of a computer including a CPU, a RAM, and a ROM. The controller 50 has a continuous machining control unit 51, a grinding control unit 52, and an information storage 53.

0036 The continuous machining control unit 51 is a processing unit that totally controls a process of continuously grinding a plurality of workpieces W. For example, although not illustrated in FIG. 1, a material storage storing unmachined workpieces W therein, a product storage for storing machined workpieces W, and a loader functioning to attach a workpiece W stored in the material storage to the chuck 19 and to remove a machined workpiece W from the chuck 19 and store the workpiece W into the product storage are arranged around the machine tool 1, and the continuous machining control unit 51 executes a continuous operation by controlling the machine tool 1 as well as the material storage, the product storage, and the loader.

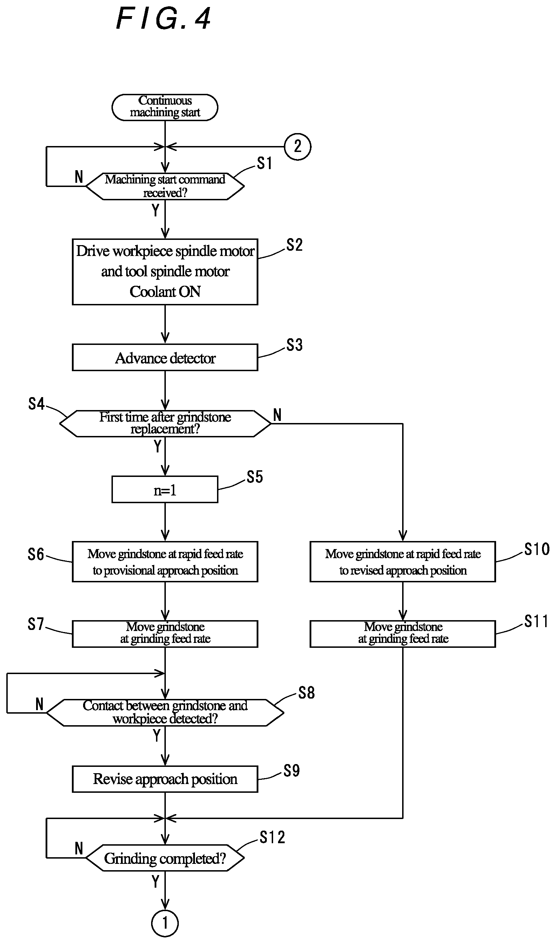

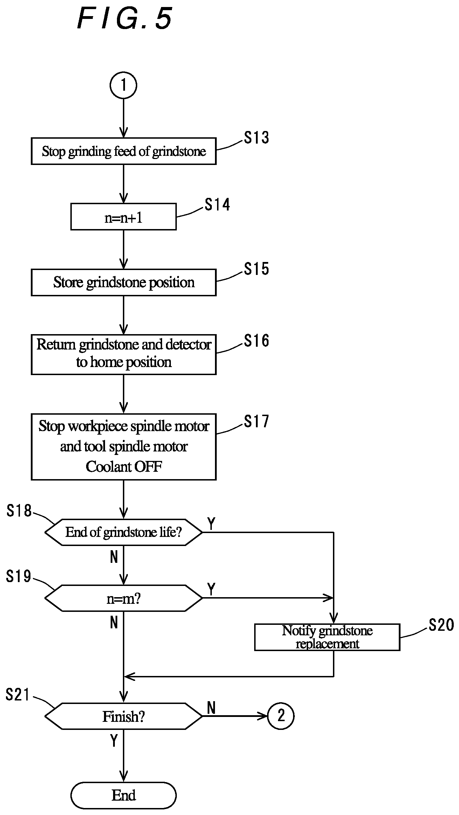

0037 The grinding control unit 52 is a processing unit that controls the machine tool 1 to machine the spherical portion Wa of the workpiece W. The grinding control unit 52 executes a process illustrated in FIGS. 4 and 5. Specifically, the grinding control unit 52 starts the process upon receipt of a continuous machining start command from the continuous machining control unit 51, and then waits until receiving a machining start command from the continuous machining control unit 51, that is to say, until an unmachined workpiece W becomes ready for grinding after being clamped by the chuck 19 (step S1).

0038 Upon receipt of the machining start command, the grinding control unit 52 drives the workpiece spindle motor 20 to rotate the workpiece spindle 17, the chuck 19, and the workpiece W, drives the tool spindle motor 28 to rotate the tool spindle 27 and the grindstone T, and starts supply of coolant from the coolant supply 42 (step S2). Once the supply of coolant from the coolant supply 42 is started, coolant is supplied to the through hole 27a of the tool spindle 27 through the supply pipe 43 and the rotary joint 41. Thereafter, the coolant passes through the through hole 27a and then the through holes T₁ₐ and T₂ₐ of the grindstone T, after which the coolant is discharged through an opening formed in the concave surface T_{1b}.

0039 Subsequently, the grinding control unit 52 drives the air cylinder 38 to advance the detector 39 toward the workpiece W and bring the pair of styluses 39a into contact with the spherical portion Wa of the workpiece W such that the spherical portion Wa is sandwiched by the pair of styluses 39 (step S3). Thereafter, the grinding control unit 52 verifies whether this machining is the first time after replacement for the grindstone T (step S4). Where it is the first time, the grinding control unit 52 sets a counter n to the initial value "1" (step S5), and then drives the X-axis drive motor 11 and the Z-axis drive motor 8 to move the carriage 4 and the table 5 at a rapid feed rate to move the grindstone T to a provisionally set approach position (hereinafter, referred to as "provisional approach position") (step S6).

0040 The provisional approach position is a safe position which is sufficiently spaced away such that the grindstone T cannot come into contact with the workpiece W. The provisional approach position is set at a position such that the concave surface T_{1b} of the grindstone T comes into contact with the spherical portion Wa of the workpiece W when the grindstone T is moved toward the spherical portion Wa along the axis of the tool spindle 27 from the position. The provisional approach position is previously set and stored in the information storage 53 of the controller 50. Information on whether the machining is the first time after replacement for the grindstone T is also stored in the information storage 53.

0041 Subsequently, the grinding control unit 52 drives the X-axis drive motor 11 and the Z-axis drive motor 8 to move the grindstone T at a grinding feed rate along the axis of the tool spindle 27 through combined operation of the X-axis movement mechanism 9 and Z-axis movement mechanism 6 (step S7), and monitors the status of load of at least one of the X-axis drive motor 11, Z-axis drive motor 8, and workpiece spindle motor 20 to detect the concave surface T_{1b} of the grindstone T coming into contact with the spherical portion Wa (step S8). That is to say, the loads on the X-axis drive motor 11, Z-axis drive motor 8, and workpiece spindle motor 20 are increased when the concave surface T_{1b} of the grindstone T comes into contact with the spherical portion Wa. Therefore, monitoring any of these motors enables detection of the grindstone T coming into contact with the spherical portion Wa.

0042 Once detecting the grindstone T coming into contact with the spherical portion Wa, the grinding control unit 52 revises, i.e., updates, the provisional approach position stored in the information storage 53 with a position which is reached by moving the grindstone T a predetermined distance away from the spherical portion Wa along the axis of the tool spindle 27 from the position at which the grindstone T is positioned at the time of detection (step S9). The approach position after this revision (hereinafter, referred to as "revised approach position") is a position which is shifted as much as possible to the spherical portion Wa side from the provisional approach position and at which the grindstone T cannot come into contact with the spherical portion Wa.

0043 After the grindstone T comes into contact with the spherical portion Wa, the spherical portion Wa is grinded by the grindstone T. During the grinding, coolant is discharged through the opening in the concave surface T_{1b} so that the coolant spreads all over the portion on which the grinding by the concave surface T_{1b} is acting. Therefore, the cooling effect and the clogging prevention effect are sufficiently obtained. Note that, since, as described above, the tool spindle unit 25 is arranged with the axis of the tool spindle 27 tilted to the right with respect to the X-axis, the grindstone T is able to come into contact only with the spherical portion Wa when coming into contact with the spherical portion Wa and is prevented from interfering with the detector 39.

0044 In the foregoing step S4, on the other hand, where it is verified that the machining is the second time or more after replacement for the grindstone T, the grinding control unit 52 drives the X-axis drive motor 11 and the Z-axis drive motor 8 to move the grindstone T at the rapid feed rate to the revised approach position (step S10), and then drives the X-axis drive motor 11 and the Z-axis drive motor 8 to move the grindstone T at the grinding feed rate along the axis of the tool spindle 27 through combined operation of the X-axis movement mechanism 9 and Z-axis movement mechanism 6 (step S11). Thereby, the concave surface T_{1b} of the grindstone T is brought into contact with the spherical portion Wa and the spherical portion Wa is grinded in the same manner as described above. During the grinding, coolant is discharged through the opening in the concave surface T_{1b} so that the coolant spreads all over the portion on which the grinding by the concave surface T_{1b} is acting. Therefore, the cooling effect and the clogging prevention effect are sufficiently obtained.

0045 After the grinding is started in the step S7 or in the step S11, the grinding control unit 52 monitors whether the grinding completion signal is output from the detector 39 (step S12). Upon receipt of the grinding completion signal, the grinding control unit 52 stops the grinding feed of the grindstone T (step S13), and updates the counter n (step S14) and stores the then position of the grindstone T into the information storage 53 (step S15). Thereafter, the grinding control unit 52 drives the X-axis drive motor 11 and the Z-axis drive motor 8 to return the grindstone T at the rapid feed rate to its home position and drives the air cylinder 38 to retract the detector 39 to its home position (step S16).

0046 Subsequently, the grinding control unit 52 stops the workpiece spindle motor 20 and the tool spindle motor 28 and stops the supply of coolant from the coolant supply 42 (step S17). Thereafter, the grinding control unit 52 compares the position of the grindstone T at the time of grinding completion (grinding completion position) detected in the step S15 with the grinding completion position detected in the first-time machining to calculate an amount of variation between them. On the basis of whether the calculated amount of variation exceeds a predetermined amount, the grinding control unit 52 makes a judgment on the life of the grindstone T (step S18). This amount of variation is equivalent to an amount of wear of the grindstone T. When the amount of variation, i.e., the amount of wear exceeds a predetermined limit amount, the grinding control unit 52 judges that the grindstone T has reached the end of its life, and notifies the outside of the need to replace the grindstone T (step S20).

0047 When the amount of variation does not exceed the predetermined amount, the grinding control unit 52 judges whether the counter n, that is to say, the number of times of grinding using the grindstone T has reached a preset limit number of times m (step S19). When it has reached the limit number of times, the grinding control unit 52 notifies the outside of the need to replace the grindstone T (step S20). As described above, when the amount of wear of the grindstone T exceeds the predetermined amount, the grindstone T can be judged to have reached the end of its life and the grindstone T therefore needs to be replaced. However, the amount of wear is not the only criterion for replacement of the grindstone T. When the number of times of grinding has reached the preset limit number of times m, the surface accuracy of the machined surface cannot satisfy a predetermined level. Therefore, the number of times of grinding also can be used as a criterion for replacement of the grindstone T. In this embodiment, the grindstone T is to be replaced when either the amount of wear of the grindstone T or the number of times of grinding for the grindstone T exceeds its reference value, which enables more appropriate replacement of the grindstone T and consequently enables the accuracy in machining the workpieces W to be suitably maintained.

0048 The grinding control unit 52 repeats the above-described steps S1 through S20 until receiving a machining finish signal from the continuous machining control unit 51. Upon receipt of the machining finish signal, the grinding control unit 52 finishes the process (step S21).

0049 In the machine tool according to this embodiment having the above-described configuration, the spherical portion Wa of the workpiece W is grinded in the manner described below under control by the controller 50.

0050 That is to say, the grinding control unit 52 starts the process upon receipt of the continuous machining start command from the continuous machining control unit 51. Thereafter, upon receipt of the machining start command from the continuous machining control unit 51, the grinding control unit 52 drives the workpiece spindle motor 20 to rotate the workpiece W, drives the tool spindle motor 28 to rotate the grindstone T, and starts supply of coolant from the coolant supply 42 (step S2). Further, the grinding control unit 52 drives the air cylinder 38 to advance the detector 39 toward the workpiece W by and bring the pair of styluses 39a into contact with the spherical portion Wa (step S3).

0051 Subsequently, the grinding control unit 52 verifies whether the machining is the first time after replacement for the grindstone T (step S4). When it is the first time, the grinding control unit 52 moves the grindstone T at the rapid feed rate to the provisional approach position (step S6), and then moves the grindstone T at the grinding feed rate along the axis of the tool spindle 27 (step S7). On the other hand, when the machining is the second time or more, the grinding control unit 52 moves the grindstone T at the rapid feed rate to the revised approach position (step S10), and then moves the grindstone T at the grinding feed rate along the axis of the tool spindle 27 (step S7).

0052 When using a new grindstone T, the position of the concave surface T_{1b} of the grindstone T is not accurately recognized. Therefore, in the first-time machining, the grindstone T is moved at the rapid feed rate to a safe position (provisional approach position) which is sufficiently spaced away such that the grindstone T cannot come into contact with the spherical portion Wa of the workpiece W, which ensures that the grindstone T is prevented from colliding with the workpiece W.

0053 The provisional approach position is thereafter revised on the basis of the contact position between the grindstone T and the workpiece W detected in the first-time machining. Thereafter, in and after the second-time machining, the grindstone T is moved at the rapid feed rate to and positioned at the revised approach position. The revised approach position is a position which is shifted as much as possible to the spherical portion Wa side from the provisional approach position and at which the grindstone T cannot come into contact with the spherical portion Wa. Therefore, in and after the second-time machining, positioning the grindstone T at the revised approach position enables the grinding to be performed efficiently in a shorter machining time.

0054 After the grindstone T is moved at the rapid feed rate to and positioned at the approach position in the above-described manner, the grindstone T is moved at the grinding feed rate along the axis of the tool spindle 27. Thereby, the spherical portion Wa of the workpiece W is brought into contact with the concave surface T_{1b} as the grinding acting surface of the grindstone T and the spherical portion Wa is grinded. During the grinding, coolant is discharged through the opening formed in the concave surface T_{1b} so that the coolant spreads all over the portion on which the grinding by the concave surface T_{1b} is acting. Therefore, the cooling effect and the clogging prevention effect are sufficiently obtained so that preferable grinding is carried out.

0055 Once the detector 39 detects the spherical portion Wa reaching a predetermined dimension (step S12), the grinding is finished (steps S13 through S17) and a judgment is made on the life of the grindstone T (step S18). When the grindstone T has reached the end of its life or when the number of times of grinding using the grindstone T has reached the limit number of times m (step S19), a notification of the need to replace the grindstone T is made to the outside (Step S20). Thus, since a notification is made to the outside when the grindstone T needs to be replaced, it is possible to replace the grindstone T at an appropriate time, and consequently the accuracy in machining the workpieces W is suitably maintained.

0056 Further, as described above, the machine tool 1 according to this embodiment is configured by combining the typical general-purpose NC machine tool components, namely, the bed 2, the guide board 3, the workpiece spindle unit 15, the carriage 4, the table 5, the Z-axis movement mechanism 6, and the X-axis movement mechanism 9 with the tool spindle unit 25, the detection unit 35, and the coolant supply mechanism 40 and providing the grinding control unit 52 in the controller 50. Therefore, this machine tool 1 can be produced at a low cost; consequently, even when the product to be machined (workpiece W) is small in production quantity, the equipment cost to order volume can be suppressed and the product can therefore be manufactured at an appropriate cost.

0057 Hereinbefore, a specific embodiment of the present invention has been described. However, the present invention is not limited to the above-described embodiment and can be implemented in other manners.

0058 For example, the above-described embodiment uses the detector 39 having the pair of arm-like styluses 39a; however, the present invention is not limited to such a detector. A detector having a single stylus 39a coming into contact with the spherical portion Wa may be used instead. Such a detector is also able to detect the spherical portion Wa reaching a predetermined dimension.

0059 Further, in the above-described embodiment, the workpiece headstock 16 and the workpiece spindle motor 20 are provided separately; however, the present invention is not limited to such a configuration and a configuration is possible in which the workpiece spindle motor 20 is incorporated in the workpiece headstock 16.

0060 The scope of the invention is not defined by the above-described embodiments, but is defined by the appended claims.

### Reference Signs List

0061
- 1: Machine tool
- 2: Bed
- 3: Guide board
- 4: Carriage
- 5: Table
- 6: Z-axis movement mechanism
- 7: Ball screw
- 8: Z-axis drive motor
- 9: X-axis movement mechanism
- 10: Ball screw
- 11: X-axis drive motor
- 15: Workpiece spindle unit
- 16: Workpiece headstock
- 17: Workpiece spindle
- 19: Chuck
- 20: Workpiece spindle motor
- 25: Tool spindle unit
- 26: Tool headstock
- 27: Tool spindle
- 28: Tool spindle motor
- 35: Detection unit
- 39: Detector
- 40: Coolant supply mechanism
- 41: Rotary joint
- 42: Coolant supply
- 50: Controller
- 51: Continuous machining control unit
- 52: Grinding control unit
- 53: Information storage

## Claims

1. A machine tool (1) comprising:
a workpiece spindle unit (15) including a workpiece spindle (17) and a workpiece spindle motor (20), the workpiece spindle (17) being rotatably held and configured to hold a workpiece (W), the workpiece spindle motor (20) being configured to rotate the workpiece spindle (17);
a tool spindle unit (25) including a tool spindle (27) and a tool spindle motor (28), the tool spindle (27) being rotatably held and configured to hold a cup grindstone (T), the tool spindle motor (28) being configured to rotate the tool spindle (27);
a first-axis movement mechanism (6) configured to move the tool spindle unit (25) relative to the workpiece spindle unit (15) in a direction of a first axis that extends along an axis of the workpiece spindle (17); and
a second-axis movement mechanism (9) configured to move the tool spindle unit (25) relative to the workpiece spindle unit (15) in a direction of a second axis perpendicular to the first axis, wherein the tool spindle unit (25) is arranged on a table (5) with an axis of the tool spindle (27) positioned in a plane that is parallel to a plane formed by the first axis and the second axis and that includes the axis of the workpiece spindle (17); and
a controller (50) configured to control the workpiece spindle motor (20), the tool spindle motor (28), the first-axis movement mechanism (6), and the second-axis movement mechanism (9),
the first-axis movement mechanism (6) including a first-axis drive motor (8),
the second-axis movement mechanism (9) including a second-axis drive motor (11),
the tool spindle unit (25) being arranged with the axis of the tool spindle (27) tilted with respect to the second axis, **characterized in that**:
the cup grindstone (T) has a formed concave surface (T_{1b}) coming into contact with a spherical portion (Wa) of the workpiece (W) to grind the spherical portion of the workpiece (W); and
the controller (50) is configured to drive both the first-axis movement mechanism (6) and the second-axis movement mechanism (9) to move the tool spindle unit (25) relative to the workpiece spindle unit (15) along the axis of the tool spindle (27) through combined operation of the first-axis movement mechanism (6) and second-axis movement mechanism (9), thereby bringing the concave surface (T_{1b}) of the cup grindstone (T) held by the tool spindle (27) into contact with the spherical portion (Wa) of the workpiece (W) held by the workpiece spindle (17) to grind the spherical portion (Wa) of the workpiece (W).

2. The machine tool (1) according to claim 1, **characterized in that**:
the controller (50) is configured to drive at least one of the first-axis movement mechanism (6) and second-axis movement mechanism (9) to move the tool spindle unit (25) relative to the workpiece spindle unit (15) at a rapid feed rate such that the cup grindstone (T) is positioned at an approach position set at a position prior to the cup grindstone (T) coming into contact with the workpiece (W), and then drive both the first-axis movement mechanism (6) and the second-axis movement mechanism (9) to move the tool spindle unit (25) relative to the workpiece spindle unit (15) at a grinding feed rate set for grinding; and
the controller (50) is further configured to monitor a load on at least one of the workpiece spindle motor (20), tool spindle motor (28), first-axis drive motor (8), and second-axis drive motor (11) to detect the cup grindstone (T) coming into contact with the workpiece (W) and configured to revise the approach position to a position which is located prior to and spaced a preset distance from a detected contact position between the cup grindstone (T) and the workpiece (W).

3. The machine tool (1) according to claim 1 or 2, **characterized in that**:
the machine tool (1) comprises a detector (39) configured to detect an outer diameter of the workpiece (W) reaching a predetermined dimension during grinding of the workpiece (W);
the controller (50) is configured to finish the grinding when the detector (39) detects the outer diameter of the workpiece (W) reaching the predetermined dimension and configured to store as a machining completion position a relative positional relation between the cup grindstone (T) and the workpiece (W) at the time of detection; and
the controller (50) is further configured to, in machining a plurality of workpieces (W) with the cup grindstone (T), compare a machining completion position obtained in machining of a current workpiece (W) with a machining completion position obtained in machining of an initial workpiece (W), and when an amount of variation between the machining completion positions exceeds a predetermined limit amount, judge that the cup grindstone (T) has reached an end of its life and make a notification to outside.

4. The machine tool (1) according to any one of claims 1 to 3, **characterized in that**:
the cup grindstone (T) has a through hole (T₁ₐ) formed to penetrate the cup grindstone (T) along an axis of the cup grindstone (T);
the tool spindle (27) has a supply hole (27a) communicating with the through hole (T₁ₐ) of the cup grindstone (T) held by the tool spindle (27); and
the machine tool (1) further comprises a coolant supply mechanism (40) configured to supply coolant to the supply hole (27a) of the tool spindle (27) to discharge the coolant through an opening of the through hole (T₁ₐ) formed in the cup grindstone (T).

## Patentansprüche

1. Werkzeugmaschine (1), umfassend:
eine Werkstückspindeleinheit (15), die eine Werkstückspindel (17) und einen Werkstückspindelmotor (20) aufweist, wobei die Werkstückspindel (17) drehbar gehalten ist und dazu eingerichtet ist, ein Werkstück (W) zu halten, wobei der Werkstückspindelmotor (20) dazu eingerichtet ist, die Werkstückspindel (17) zu drehen;
eine Werkzeugspindeleinheit (25), die eine Werkzeugspindel (27) und einen Werkzeugspindelmotor (28) aufweist, wobei die Werkzeugspindel (27) drehbar gehalten ist und dazu eingerichtet ist, eine Topfschleifscheibe (T) zu halten, wobei der Werkzeugspindelmotor (28) dazu eingerichtet ist, die Werkzeugspindel (27) zu drehen;
einen Bewegungsmechanismus (6) einer ersten Achse, der dazu eingerichtet ist, die Werkzeugspindeleinheit (25) relativ zu der Werkstückspindeleinheit (15) in einer Richtung einer ersten Achse zu bewegen, die sich entlang einer Achse der Werkstückspindel (17) erstreckt; und
einen Bewegungsmechanismus (9) einer zweiten Achse, der dazu eingerichtet ist, die Werkzeugspindeleinheit (25) relativ zu der Werkstückspindeleinheit (15) in einer Richtung einer zweiten Achse senkrecht zu der ersten Achse zu bewegen, wobei die Werkzeugspindeleinheit (25) auf einem Tisch (5) angeordnet ist, wobei eine Achse der Werkzeugspindel (27) in einer Ebene positioniert ist, die parallel zu einer Ebene verläuft, die durch die erste Achse und die zweite Achse gebildet ist und die die Achse der Werkstückspindel (17) enthält; und
einen Controller (50), der dazu eingerichtet ist, den Werkstückspindelmotor (20), den Werkzeugspindelmotor (28), den Bewegungsmechanismus (6) einer ersten Achse und den Bewegungsmechanismus (9) einer zweiten Achse zu steuern,
wobei der Bewegungsmechanismus (6) einer ersten Achse einen Antriebsmotor (8) einer ersten Achse aufweist,
wobei der Bewegungsmechanismus (9) einer zweiten Achse einen Antriebsmotor (11) einer zweiten Achse aufweist,
wobei die Werkzeugspindeleinheit (25) so angeordnet ist, dass die Achse der Werkzeugspindel (27) in Bezug auf die zweite Achse geneigt ist, **dadurch gekennzeichnet, dass**:
die Topfschleifscheibe (T) eine geformte konkave Fläche (T1b) aufweist, die mit einem sphärischen Abschnitt (Wa) des Werkstücks (W) in Kontakt kommt, um den sphärischen Abschnitt des Werkstücks (W) zu schleifen; und
der Controller (50) dazu eingerichtet ist, sowohl den Bewegungsmechanismus (6) einer ersten Achse als auch den Bewegungsmechanismus (9) einer zweiten Achse anzutreiben, um die Werkzeugspindeleinheit (25) relativ zu der Werkstückspindeleinheit (15) entlang der Achse der Werkzeugspindel (27) durch den kombinierten Betrieb des Bewegungsmechanismus (6) einer ersten Achse und des Bewegungsmechanismus (9) einer zweiten Achse zu bewegen, wodurch die konkave Fläche (T1b) der durch die Werkzeugspindel (27) gehaltenen Topfschleifscheibe (T) mit dem sphärischen Abschnitt (Wa) des durch die Werkstückspindel (17) gehaltenen Werkstücks (W) in Kontakt gebracht wird, um den sphärischen Abschnitt (Wa) des Werkstücks (W) zu schleifen.

2. Werkzeugmaschine (1) nach Anspruch 1, **dadurch gekennzeichnet, dass**:
der Controller (50) dazu eingerichtet ist, mindestens einen des Bewegungsmechanismus (6) einer ersten Achse und des Bewegungsmechanismus (9) einer zweiten Achse anzutreiben, um die Werkzeugspindeleinheit (25) relativ zu der Werkstückspindeleinheit (15) mit einer schnellen Vorschubrate zu bewegen, dergestalt, dass die Topfschleifscheibe (T) in einer Annäherungsposition positioniert wird, die auf eine Stelle eingestellt ist, bevor die Topfschleifscheibe (T) mit dem Werkstück (W) in Kontakt kommt, und dann sowohl den Bewegungsmechanismus (6) einer ersten Achse als auch den Bewegungsmechanismus (9) einer zweiten Achse anzutreiben, um die Werkzeugspindeleinheit (25) relativ zu der Werkstückspindeleinheit (15) mit einer für das Schleifen eingestellten Schleifvorschubrate zu bewegen; und
der Controller (50) des Weiteren dazu eingerichtet ist, eine Last an mindestens einem von dem Werkstückspindelmotor (20), dem Werkzeugspindelmotor (28), dem Antriebsmotor (8) einer ersten Achse und dem Antriebsmotor (11) einer zweiten Achse zu überwachen, um zu detektieren, wenn die Topfschleifscheibe (T) mit dem Werkstück (W) in Kontakt kommt, und dazu eingerichtet ist, die Annäherungsposition auf eine Position zu revidieren, die sich vor einer detektierten Kontaktposition zwischen der Topfschleifscheibe (T) und dem Werkstück (W) befindet und um eine voreingestellte Distanz von einer detektierten Kontaktposition zwischen der Topfschleifscheibe (T) und dem Werkstück (W) beabstandet ist.

3. Werkzeugmaschine (1) nach Anspruch 1 oder 2, **dadurch gekennzeichnet, dass**:
die Werkzeugmaschine (1) einen Detektor (39) umfasst, der dazu eingerichtet ist zu detektieren, wenn ein Außendurchmesser des Werkstücks (W) während des Schleifens des Werkstücks (W) eine zuvor festgelegte Abmessung erreicht;
der Controller (50) dazu eingerichtet ist, das Schleifen zu beenden, wenn der Detektor (39) detektiert, dass der Außendurchmesser des Werkstücks (W) die zuvor festgelegte Abmessung erreicht hat, und dazu eingerichtet ist, eine relative Positionsbeziehung zwischen der Topfschleifscheibe (T) und dem Werkstück (W) zum Zeitpunkt der Detektion als eine Bearbeitungsvollendungsposition zu speichern; und
der Controller (50) des Weiteren dazu eingerichtet ist, bei der Bearbeitung mehrerer Werkstücke (W) mit der Topfschleifscheibe (T) eine bei der Bearbeitung eines momentanen Werkstücks (W) erhaltene Bearbeitungsvollendungsposition mit einer bei der Bearbeitung eines anfänglichen Werkstücks (W) erhaltenen Bearbeitungsvollendungsposition zu vergleichen und, wenn ein Abweichungsbetrag zwischen den Bearbeitungsvollendungspositionen einen zuvor festgelegten Grenzbetrag überschreitet, zu befinden, dass die Topfschleifscheibe (T) ein Ende ihrer Lebensdauer erreicht hat, und eine Meldung nach draußen zu senden.

4. Werkzeugmaschine (1) nach einem der Ansprüche 1 bis 3, **dadurch gekennzeichnet, dass**:
die Topfschleifscheibe (T) ein Durchgangsloch (T1a) aufweist, das so gebildet ist, dass es die Topfschleifscheibe (T) entlang einer Achse der Topfschleifscheibe (T) durchdringt;
die Werkzeugspindel (27) ein Zufuhrloch (27a) aufweist, das mit dem Durchgangsloch (T1a) der durch die Werkzeugspindel (27) gehaltenen Topfschleifscheibe (T) kommuniziert; und
die Werkzeugmaschine (1) des Weiteren einen Kühlmittelzufuhrmechanismus (40) umfasst, der dazu eingerichtet ist, dem Zufuhrloch (27a) der Werkzeugspindel (27) Kühlmittel zuzuleiten, um das Kühlmittel durch eine Öffnung des in der Topfschleifscheibe (T) gebildeten Durchgangslochs (T1a) abzulassen.

## Revendications

1. Machine-outil (1) comprenant :
une unité de broche porte-pièce (15) comportant une broche porte-pièce (17) et un moteur de broche porte-pièce (20), la broche porte-pièce (17) étant maintenue de manière rotative et conçue pour maintenir une pièce (W), le moteur de broche porte-pièce (20) étant conçu pour faire tourner la broche porte-pièce (17) ;
une unité de broche porte-outil (25) comportant une broche porte-outil (27) et un moteur de broche porte-outil (28), la broche porte-outil (27) étant maintenue de manière rotative et conçue pour maintenir une meule boisseau (T), le moteur de broche porte-outil (28) étant conçu pour faire tourner la broche porte-outil (27) ;
un mécanisme de déplacement de premier axe (6) conçu pour déplacer l'unité de broche porte-outil (25) par rapport à l'unité de broche porte-pièce (15) dans la direction d'un premier axe qui s'étend le long d'un axe de la broche porte-pièce (17) ; et
un mécanisme de déplacement de second axe (9) conçu pour déplacer l'unité de broche porte-outil (25) par rapport à l'unité de broche porte-pièce (15) dans la direction d'un second axe perpendiculaire au premier axe, dans lequel l'unité de broche porte-outil (25) est disposée sur une table (5) avec un axe de la broche porte-outil (27) positionné dans un plan qui est parallèle à un plan formé par le premier axe et le second axe et qui inclut l'axe de la broche porte-pièce (17) ; et
un contrôleur (50) conçu pour commander le moteur de broche porte-pièce (20), le moteur de broche porte-outil (28), le mécanisme de déplacement de premier axe (6), et le mécanisme de déplacement de second axe (9),
le mécanisme de déplacement de premier axe (6) comportant un moteur d'entraînement de premier axe (8),
le mécanisme de déplacement de second axe (9) comportant un moteur d'entraînement de second axe (11),
l'unité de broche porte-outil (25) étant agencée avec l'axe de la broche porte-outil (27) incliné par rapport au second axe, **caractérisée en ce que** :
la meule boisseau (T) a une surface concave profilée (T_{1b}) qui vient en contact avec une partie sphérique (Wa) de la pièce (W) pour meuler la partie sphérique de la pièce (W) ; et
le contrôleur (50) est configuré pour entraîner à la fois le mécanisme de déplacement de premier axe (6) et le mécanisme de déplacement de second axe (9) pour déplacer l'unité de broche porte-outil (25) par rapport à l'unité de broche porte-pièce (15) le long de l'axe de la broche porte-outil (27) grâce au fonctionnement combiné du mécanisme de déplacement de premier axe (6) et du mécanisme de déplacement de second axe (9), amenant ainsi la surface concave (T1b) de la meule boisseau (T) maintenue par la broche porte-outil (27) en contact avec la partie sphérique (Wa) de la pièce (W) maintenue par la broche porte-pièce (17) pour meuler la partie sphérique (Wa) de la pièce (W).

2. Machine-outil (1) selon la revendication 1, **caractérisée en ce que** :
le contrôleur (50) est configuré pour entraîner au moins l'un parmi le mécanisme de déplacement de premier axe (6) et le mécanisme de déplacement de second axe (9) pour déplacer l'unité de broche porte-outil (25) par rapport à l'unité de broche porte-pièce (15) à une vitesse d'avance rapide de manière que la meule boisseau (T) soit positionnée à une position d'approche définie avant que la meule boisseau (T) n'entre en contact avec la pièce (W), puis pour entraîner à la fois le mécanisme de déplacement de premier axe (6) et le mécanisme de déplacement de second axe (9) pour déplacer l'unité de broche porte-outil (25) par rapport à l'unité de broche porte-pièce (15) à une vitesse d'avance de meulage définie pour le meulage ; et
le contrôleur (50) est en outre configuré pour surveiller une charge sur au moins l'un parmi le moteur de broche porte-pièce (20), le moteur de broche porte-outil (28), le moteur d'entraînement de premier axe (8), et le moteur d'entraînement de second axe (11) pour détecter la meule boisseau (T) entrant en contact avec la pièce (W) et configuré pour modifier la position d'approche afin de la situer en amont d'une position de contact détectée entre la meule boisseau (T) et la pièce (W) et à une distance prédéfinie de celle-ci.

3. Machine-outil (1) selon la revendication 1 ou 2, **caractérisée en ce que** :
la machine-outil (1) comprend un détecteur (39) conçu pour détecter le moment où un diamètre extérieur de la pièce (W) atteint une dimension prédéterminée pendant le meulage de la pièce (W) ;
le contrôleur (50) est configuré pour mettre fin au meulage lorsque le détecteur (39) détecte que le diamètre extérieur de la pièce (W) atteint la dimension prédéterminée et est configuré pour enregistrer, en tant que position de fin d'usinage, une relation de position relative entre la meule boisseau (T) et la pièce (W) au moment de la détection ; et
le contrôleur (50) est en outre configuré pour, lors de l'usinage d'une pluralité de pièces (W) à l'aide de la meule boisseau (T), comparer une position de fin d'usinage obtenue lors de l'usinage d'une pièce en cours (W) à une position de fin d'usinage obtenue lors de l'usinage d'une première pièce (W), et, lorsque l'écart entre les positions de fin d'usinage dépasse une valeur limite prédéterminée, déterminer que la meule boisseau (T) a atteint une fin de sa durée de vie et envoyer une notification à l'extérieur.

4. Machine-outil (1) selon l'une quelconque des revendications 1 à 3,
**caractérisée en ce que** :
la meule boisseau (T) possède un trou traversant (T₁ₐ) formé pour pénétrer dans la meule boisseau (T) le long d'un axe de la meule boisseau (T) ;
la broche porte-outil (27) possède un trou d'alimentation (27a) communiquant avec le trou traversant de la meule boisseau (T) maintenue par la broche porte-outil (27) ; et
la machine-outil (1) comprend en outre un mécanisme d'alimentation en liquide de refroidissement (40) conçu pour acheminer du liquide de refroidissement vers le trou d'alimentation (27a) de la broche porte-outil (27) pour déverser le liquide de refroidissement à travers une ouverture du trou traversant formé dans la meule boisseau (T).
